# EUROPÄISCHE PATENTSCHRIFT

(11) **EP 4 554 087 B1**
(45) Veröffentlichungstag und Bekanntmachung des Hinweises auf die Patenterteilung: **03.12.2025**
(21) Anmeldenummer: 24212100.2
(22) Anmeldetag: 11.11.2024
(51) Int. Cl.: H02S 20/23, H02S 20/22, F24S 25/613, F24S 25/615, H02S 20/24

(54) **HALTERUNG UND ANORDNUNG FÜR EINE UNTERKONSTRUKTION VON PHOTOVOLTAIKMODULEN**
BRACKET AND ASSEMBLY FOR A SUB-CONSTRUCTION OF PHOTOVOLTAIC MODULES
SUPPORT ET AGENCEMENT POUR UNE SOUS-STRUCTURE DE MODULES PHOTOVOLTAÏQUES

(30) Priorität: 10.11.2023 DE 202023106599 U
(43) Veröffentlichungstag der Anmeldung: 14.05.2025
(73) Patentinhaber: Soprema GmbH, 68219 Mannheim (DE); SOPREMA SAS, 67100 Strasbourg (FR)
(72) Erfinder: Jochum, Christian, 57399 Kirchhundem (DE)
(74) Vertreter: Patentanwälte Olbricht Buchhold Keulertz

(56) Entgegenhaltungen:
- JP-A- 2014 152 548
- US-A1- 2022 034 093
- US-B2- 8 707 654

## Beschreibung

Die Erfindung betrifft eine Halterung und eine Anordnung, die jeweils dazu dient, eine Unterkonstruktion von Photovoltaik-Modulen an einem Gebäude zu befestigen, z. B. an einer Flach- oder Schrägdachfläche oder an einer Wand des Gebäudes.

Das Dokument US 8 707 654 B2 bezieht sich auf wasserdichte Unterkonstruktionen für PV-Anlagen auf Dächern.

Nachfolgend wird regelmäßig ein Dach und insbesondere ein Flachdach erwähnt, als typisches Anwendungsbeispiel, ohne jedoch die Befestigung an einer Gebäudewand auszuschließen. Aufgrund der beispielhaft erläuterten Anwendung an einem Flachdach sind die verwendeten Begriffe wie "oben" oder "unten" für andere Anwendungsfälle im Sinne von "dem Gebäude zugewandt" oder "vom Gebäude abgewandt" zu verstehen.

Die Unterkonstruktion kann auf unterschiedliche Art ausgestaltet sein und enthält Elemente, an denen ein oder mehrere Photovoltaikmodule, kurz PV-Module, gehalten sind. Aus der Praxis sind unterschiedliche Systeme von Unterkonstruktionen bekannt, beispielsweise...
- ...Schienensysteme, die Aluminiumprofile und darauf abgestimmte umfassen sowie daran angepasste Klammern, welche die Ränder der PV-Module umgreifen, ...
- ...oder pultartig schräge Sockel, auf deren Schrägflächen die PV-Module aufliegen, ...
- ... wobei die beiden oben genannten Unterkonstruktionen mechanisch am Dach fixiert werden und sowohl auf Flachdächern als auch auf Schrägdächern montiert werden können, ...
- ... oder Wannen, die auf Flachdächern aufgestellt und mit Ballast gefüllt werden.

Die beiden erstgenannten Unterkonstruktionen müssen jeweils an einem Gebäude, typischerweise auf einem Gebäudedach, befestigt werden, und auch die mit Ballast versehenen Wannen, die grundsätzlich aufgrund ihres Eigengewichts einfach auf einem Flachdach abgestellt werden können, können zur Sicherheit auf dem jeweiligen Flachdach befestigt werden. Problematisch kann dabei für die jeweilige Befestigung stets die dichte Anbindung an das Gebäude sein, weil wasserführende Schichten - z.B. eine Bitumenbahn auf einem Dach - von den jeweiligen Befestigungsmitteln wie z.B. einer Befestigungsschraube durchsetzt werden. Üblicherweise weisen Flachdächer allerdings zwei Bitumenbahnen übereinander auf, so dass Lastverteilungsplatten auf die erste "Abdichtungslage" aufgelegt und dann von der zweiten Abdichtungslage überdeckt werden können.

Wenn dann die Unterkonstruktion mittels einer Halterung mechanisch an die Lastverteilungsplatte angeschlossen wurde, unter Verletzung der oberen Abdichtungslage, ist die Abdichtung des Daches aufgrund der intakten unteren Abdichtungslage insgesamt nicht beeinträchtigt. Die Haltekräfte, welche abhebenden Kräften entgegenwirken und die PV-Anlage auf dem Dach halten, werden von der oberen Abdichtungslage aufgebracht und die Lastverteilungsplatte stellt eine Halterung dar, mittels welcher die Unterkonstruktion am Gebäude befestigt ist.

Windkanalversuche haben gezeigt, dass die abhebenden Kräfte, die auf die PV-Anlage einwirken, nicht zu einer Schädigung der oberen Abdichtungslage und damit auch nicht zu einer Zerstörung des Dachs geführt haben. Auch in der Praxis haben Stürme wie der Orkan "Kyrill" im Januar 2007 nicht zu Schäden an den Dächern geführt, auf denen PV-Anlagen an den Abdichtungslagen selbst befestigt waren. Aufgrund der Zunahme an Extremwetterlagen kann es jedoch wünschenswert sein, eine besonders stabile Befestigung der PV-Anlage an dem Gebäude sicherzustellen, die über die Belastbarkeit einer oberen Abdichtungslage hinausgeht.

Der Erfindung liegt die Aufgabe zugrunde, eine Halterung für eine Unterkonstruktion von PV-Modulen anzugeben, welche die Befestigung einer PV-Unterkonstruktion durch eine Dachabdichtung hindurch an der Dachkonstruktion ermöglicht und dabei die Dichtheit der Dachabdichtung aufrechterhält. Weiterhin liegt der Erfindung die Aufgabe zugrunde, eine Anordnung anzugeben, welche bei Verwendung der Halterung einen zusätzlichen Dichtigkeitsschutz bietet.

Erfindungsgemäße Merkmale sind in Anspruch 1 und Anspruch 13 angegeben. Ausgestaltungen sind Gegenstand der Unteransprüche.

Ein erster Aspekt der Erfindung betrifft Halterung, die dazu eingerichtet ist, eine Photovoltaik-Unterkonstruktion an einem Gebäude zu befestigen, wobei die Halterung folgende Elemente aufweist:
- einen Lochteller samt Gewindestutzen,
   wobei der Lochteller eine Tellerfläche bildet, die wenigstens ein Durchgangsloch aufweist,
   und wobei sich der Gewindestutzen von der Ebene der Tellerfläche weg erstreckt,
- eine ringförmige Dichtungsmanschette, die im Gebrauch um den Gewindestutzen des Lochtellers verläuft,
   und die sich radial über die Tellerfläche hinaus erstreckt,
- ein Zwischenstück,
   das zwei Enden aufweist,
   im Gebrauch auf den Gewindestutzen geschraubt ist,
   und das zwischen seinen beiden Enden eine für Wasser undurchlässige Sperre aufweist,
- einen Dichtungsring,
   der an einem ersten Ende des Zwischenstücks so angeordnet ist, dass er an der Dichtungsmanschette oder an der Tellerfläche dicht anliegt,
- einen Deckel,
   der im Gebrauch zugfest an das zweite Ende des Zwischenstücks anschließt,
   und der eine Durchgangsöffnung in der Art aufweist, dass eine Halteschraube sich aus in einer vom Lochteller weg weisenden Richtung durch die Durchgangsöffnung erstrecken kann und gegen abhebende Kräfte gesichert ist,
- die erwähnte Halteschraube,
   deren Schraubenkopf in einem als Schraubenaufnahme bezeichneten Raum zwischen der Sperre und dem Deckel aufgenommen ist,
- und wenigstens eine Verankerungsschraube, die sich durch das Durchgangsloch des Lochtellers erstreckt und mittels welcher die Halterung im Gebrauch am Gebäude festgelegt ist.

Gegenstand der Erfindung ist somit eine Halterung, die einerseits am Gebäude befestigt wird und andererseits die Befestigung der PV-Unterkonstruktion an der Halterung ermöglicht. Die Halterung besteht aus mehreren Elementen, die jeweils aus Kunststoff, Aluminium oder Stahl bestehen können. Als Kunststoff wird vorteilhaft ein Material verwendet, das im Brandfall schmilzt, jedoch nicht brennt und daher keinen Beitrag zum Brandgeschehen leistet. Die Halterung ermöglicht eine ballastfreie Befestigung der PV-Unterkonstruktion und somit der PV-Module, weil sie an unterschiedlichen - nämlich auch an ballastfreien - Unterkonstruktionen verwendet werden kann. Auch die Halterung selbst kann ein möglichst geringes Gewicht aufweisen, indem ihre Bauteile aus Kunststoff bestehen, oder, falls kein Kunststoff verwendet werden soll, aus Aluminium, insbesondere aus solchen Aluminiumlegierungen, wie sie aus dem Bereich des Fassadenbaus bekannt sind und sich dort bewährt haben. Bei noch höheren Ansprüchen an die Temperaturbeständigkeit im Brandfall können die Bauteile der Halterung aus Stahl bestehen, z.B. aus verzinktem Stahl oder Edelstahl.

Die Halterung weist folgende Elemente auf:
- Einen Lochteller, der eine Tellerfläche und einen Gewindestutzen aufweist, wobei der Lochteller wenigstens ein Durchgangsloch aufweist und sich der Gewindestutzen von der Ebene der Tellerfläche weg erstreckt. Das eine oder die mehreren Durchgangslöcher ermöglichen die Befestigung des Lochtellers an einem Gebäude, z.B. mithilfe von Verankerungsschrauben, die sich durch die Durchgangslöcher erstrecken.
- Eine ringförmige Dichtungsmanschette, die um den Gewindestutzen des Lochtellers und sich radial über die Tellerfläche hinaus erstreckt, so dass sie dort dicht mit einer wasserführenden Ebene des Gebäudes verbunden werden kann, zum Beispiel verklebt oder verschweißt werden kann, wie z.B. mit einer Dach-Abdichtungsbahn.
- Ein Zwischenstück, das zwei Enden aufweist, auf den Gewindestutzen geschraubt ist und zwischen seinen beiden Enden eine für Wasser undurchlässige Sperre aufweist. Das Zwischenstück wirkt dadurch wie eine Abdeckkappe, so dass der Gewindestutzen nach oben hin wasserdicht verschlossen ist.
- Einen Dichtungsring, der an einem ersten Ende des Zwischenstücks so angeordnet ist, dass er der Dichtungsmanschette oder der Tellerfläche dicht anliegt.
- Einen Deckel, der zugfest an das zweite Ende des Zwischenstücks anschließt und eine Durchgangsöffnung für eine Halteschraube aufweist, so dass eine nach oben ragende Halteschraube sich durch den Deckel hindurch erstrecken kann und mit ihrem Schraubenkopf, der sich unterhalb des Deckels befindet, gegen abhebende Kräfte gesichert ist.
- Die erwähnte Halteschraube, deren über den Deckel hinausragender Schaft zum Anschluss der PV-Unterkonstruktion dient, und deren Schraubenkopf in einer so genannten Schraubenaufnahme aufgenommen ist, nämlich in einem Raum zwischen dem Deckel und der Sperre des Zwischenstücks.
- Und schließlich weist die Halterung wenigstens eine Verankerungsschraube auf, die sich durch das Durchgangsloch erstreckt und mit der die Halterung am Gebäude festgelegt wird.

Insbesondere kann der Lochteller mehrere Durchgangslöcher aufweisen und es können zwei oder mehr Verankerungsschrauben verwendet werden.

In einer Ausgestaltung kann das Zwischenstück und der Deckel im Wesentlichen einstückig ausgestaltet sein. Insbesondere in Art eines Kunststoffbauteils können Halteelemente, wie bspw. eine Halteschraube oder dergleichen, unmittelbar bei der Fertigung des Bauteils eingefasst werden.

In einer Weiterentwicklung kann die Tellerfläche des Lochtellers innerhalb des Gewindestutzens eine größere Materialstärke aufweisen als außerhalb des Gewindestutzens, und es kann wenigstens ein Durchgangsloch innerhalb des Gewindestutzens in der Tellerfläche angeordnet sein.

Fernerhin wenigstens ein Durchgangsloch außerhalb des Gewindestutzens in der Tellerfläche angeordnet ist.

Weiterhin kann die Dichtungsmanschette als Formteil ausgestaltet sein und wenigstens eine ringförmig verlaufende Stufe in der Art aufweisen, dass ein mittlerer Bereich und eine darin befindliche, den Gewindestutzen aufnehmende Öffnung höher als der außen umlaufende Rand der Dichtungsmanschette angeordnet sind.

In einer Ausgestaltung kann sich die Dichtungsmanschette so weit bis an den Gewindestutzen heran erstrecken, dass der am Zwischenstück befindliche Dichtungsring an der Dichtungsmanschette anliegt.

In Abhängigkeit von der Erstreckung der Dichtungsmanschette, oder auch unabhängig davon, kann in einer Ausgestaltung vorgesehen sein, dass die Dichtungsmanschette in einem radial inneren Bereich an der Tellerfläche befestigt ist, und in einem radial äußeren Bereich der Tellerfläche lose anliegt, und dass in diesem radial äußeren Bereich Durchgangslöcher in der Tellerfläche angeordnet sind.

Fernerhin kann vorgesehen sein, dass der Dichtungsring als separates Bauteil ausgestaltet ist.

Insbesondere bei einem als separates Bauteil ausgestalteten Dichtungsring kann vorgesehen sein, dass das Zwischenstück an seinem ersten Ende eine Nut aufweist, die dazu eingerichtet ist, den Dichtungsring aufzunehmen.

In einer Ausgestaltung kann vorgesehen sein, dass das Zwischenstück im Wesentlich rohrförmig ausgestaltet ist und die Sperre in Form einer Trennwand ausgestaltet ist, die sich quer durch das Innere des Zwischenstücks erstreckt.

Fernerhin kann vorgesehen sein, dass das Zwischenstück und der Deckel miteinander verschraubbar sind.

In einer Ausgestaltung kann vorgesehen sein, dass der Deckel auf seiner Oberseite seitliche Anschläge aufweist, welche eine Bahn begrenzen, entlang welcher ein Anschlusselement der Unterkonstruktion verschiebbar ist.

Vorteilhaft kann vorgesehen sein, dass sich die Durchgangsöffnung des Deckels in der Bahn befindet.

Ein weiterer Aspekt der Erfindung betrifft eine Anordnung, die dazu eingerichtet ist, eine Photovoltaik-Unterkonstruktion an einem Gebäude zu befestigen, mit einer Halterung, die besonders vorteilhaft eine Anzahl der vorliegend beschriebenen Merkmale aufweist, und mit einer Dichtungsscheibe, die unterhalb des Lochtellers angeordnet ist.

Unter einer Anzahl ist im Kontext der vorgestellten Erfindung eine Einzahl oder Mehrzahl eines entsprechenden Merkmals zu verstehen.

In einer Ausgestaltung der Anordnung kann vorgesehen sein, dass die Dichtungsscheibe aus einem bituminösen Werkstoff besteht.

Fernerhin kann vorgesehen sein, dass die Dichtungsscheibe beidseitig selbstklebend ausgestaltet ist.

Nachfolgend wird erläutert, wie die Halterung an einem Gebäude befestigt werden kann. Dabei wird die Montage auf einer Dachfläche, insbesondere einem Flachdach beschrieben. Die einzelnen Montageschritte müssen nicht notwendigerweise in der beschriebenen Reihenfolge durchgeführt werden. Für die Montage auf einem Schrägdach oder an einer vertikalen Wand gilt der Montageablauf mutatis mutandis. Aus der Montagebeschreibung werden die Funktion und somit auch Anforderungen an die Ausgestaltungen der oben genannten Bestandteile der Halterung sowie die sich daraus ergebenden Vorteile deutlich:
Der Lochteller wird an die Gebäudehülle angelegt, z. B. auf eine Abdichtungsbahn eines Flachdachs aufgelegt. Eine Verankerungsschraube kann durch ein Durchgangsloch geführt und in eine darunterliegende Tragkonstruktion des Gebäudes geschraubt werden, so dass nun der Lochteller an der Gebäudehülle festgelegt ist. Mehrere Durchgangslöcher können in der Tellerfläche angeordnet sein, um je nach der vorgefundenen baulichen Situation eine jeweils optimale Befestigungsstelle zum Setzen einer Verankerungsschraube nutzen zu können.

Der Gewindestutzen des Lochtellers kann als Hülse ausgestaltet und unten durch die Tellerfläche geschlossen sein, so dass auch in dem Gewindestutzen eine Verankerungsschraube montiert werden kann, wobei die Tellerfläche hierzu innerhalb des Gewindestutzens eines oder mehrere Durchgangslöcher aufweist. In diesem Bereich innerhalb des Gewindestutzens kann die Tellerfläche eine größere Materialstärke als radial außerhalb von dem Gewindestutzen aufweisen. Dies ermöglicht, Verankerungsschrauben in einer bestimmten Richtung zu führen.

Die ringförmige Dichtungsmanschette wird mit ihrer Öffnung so auf den Lochteller aufgelegt, dass sich der Gewindestutzen durch die Öffnung nach oben erstreckt. Dabei kann die Dichtungsmanschette als flache, mit der Öffnung versehene Scheibe ausgestaltet sein oder als Formteil, welches in radialer Richtung einen von außen nach innen stufigen und nach oben ansteigenden Verlauf aufweist.

Alternativ dazu, die Dichtungsmanschette als separates Element bereitzustellen und lose zu handhaben, kann die Dichtungsmanschette bereits werkseitig an dem Lochteller befestigt sein, z. B. an die Tellerfläche anvulkanisiert oder mit dieser verklebt sein. Die Dichtungsmanschette kann insbesondere in einem radial inneren Bereich, nahe dem Gewindestutzen, an der Tellerfläche befestigt sein, in radial weiterer Entfernung von dem Gewindestutzen jedoch nicht. Dies ermöglicht bei einer entsprechenden Ausgestaltung der Tellerfläche mit Durchgangslöchern, die Dichtungsmanschette dort von der Tellerfläche abzuheben und Verankerungsschrauben durch dort vorhandene Durchgangslöcher des Lochtellers zu führen.

Da sich die Dichtungsmanschette radial über die Tellerfläche hinaus erstreckt, kann sie radial außerhalb der Tellerfläche wasserdicht mit dem Gebäude verbunden werden, beispielsweise verklebt werden oder mit der erwähnten Abdichtungsbahn verschweißt werden. Die Dichtungsmanschette kann aus einem Bahnmaterial ausgeschnitten sein, beispielsweise aus einer EPDM-Folie oder aus einer Bitumenbahn, oder aus einer Vliesbahn, wobei das Vliesmaterial erst während der Montage der Halterung mit einem flüssigen Dichtungsmittel getränkt wird.

Der Gewindestutzen des Lochtellers ist vorteilhaft hohl, als Gewindehülse mit einem durch die Tellerfläche gebildeten Boden ausgestaltet. Typischerweise befindet sich der Gewindestutzen in der Mitte der Tellerfläche, so dass eine zentrale Verankerungsschraube in diese Gewindehülse eingeführt und durch ein zentrales Durchgangsloch hindurchgeführt werden kann, das sich im ansonsten geschlossenen Boden des Gewindestutzens bzw. in dem Bereich der Tellerfläche befindet, der von dem Gewindestutzen umgeben ist. Die zentrale Verankerungsschraube kann axial in Bezug auf den Gewindestutzen verlaufen, alternativ können zwei oder mehr zentrale Verankerungsschrauben durch zwei oder mehr zentrale Durchgangslöcher hindurchgeführt werden, die jeweils schräg, vorteilhaft jeweils in einem 60° Winkel, zur Mittelachse des Gewindestutzens stehen. Insbesondere wenn im Bereich der einen oder mehreren zentralen Durchgangslöcher die Tellerfläche eine ausreichend große Wandstärke aufweist, können die Durchgangslöcher dazu dienen, die axiale bzw. die schräg ausgerichteten Verankerungsschrauben in dem jeweils gewünschten Winkel zur Tellerfläche zu führen.

Wenn je nach vorgefundener Montagesituation die Verwendung der einen oder zwei zentralen Verankerungsschrauben nachteilig oder nicht ausreichend ist, kann entweder alternativ dazu oder auch zusätzlich dazu die Festlegung des Lochtellers am Gebäude durch eine oder mehrere äußere Verankerungsschrauben erfolgen, die durch die oben erwähnten äußeren Durchgangslöcher des Lochtellers geführt werden, welche sich in einem radialen Abstand und außerhalb von dem Gewindestutzen in der Tellerfläche befinden. Die Verankerungsschrauben können dabei sämtlich identisch ausgestaltet sein, ihre Bezeichnung als zentrale oder äußere Verankerungsschrauben dient lediglich zur Unterscheidung, wo sie angeordnet sind. Durch die wenigstens eine Verankerungsschraube wird die Gebäudehülle, beispielsweise die oben erwähnte Abdichtungsbahn, verletzt.

Falls die Dichtungsmanschette nicht bereits werkseitig mit dem Lochteller verbunden ist, kann abweichend von der obigen Beschreibung auch erst jetzt die Dichtungsmanschette auf den Lochteller aufgelegt werden, nachdem der Lochteller mithilfe der einen oder mehreren Verankerungsschrauben am Gebäude festgelegt worden ist.

Weiterhin kann nun, nachdem der Lochteller mithilfe der einen oder mehreren Verankerungsschrauben am Gebäude festgelegt worden ist, die Dichtungsmanschette gegenüber der Gebäudehülle abgedichtet werden. Dies kann zum Beispiel dadurch erfolgen, dass sie mit der Gebäudehülle verklebt oder verschweißt wird, z.B. kann sie auf einem Flachdach mit der dort befindlichen oberen Abdichtungslage verschweißt werden. Diese Abdichtung der Dichtungsmanschette kann unmittelbar nach Befestigung des Lochtellers erfolgen, was wegen der guten Zugänglichkeit vorteilhaft ist, es kann jedoch auch noch zu einem späteren Zeitpunkt erfolgen. Die Abdichtung der Dichtungsmanschette kann grundsätzlich sogar bereits erfolgen, bevor der Lochteller mithilfe der einen oder mehreren zentralen Verankerungsschrauben am Gebäude festgelegt wird. Für den Fall jedoch, dass beim Setzen der Verankerungsschrauben Probleme auftreten und die Position der Halterung geringfügig korrigiert werden soll, ist es vorteilhaft die Abdichtung der Dichtungsmanschette erst nach dem Setzen der Verankerungsschrauben abzudichten.

Auf den Gewindestutzen des Lochtellers wird das Zwischenstück geschraubt. Der Gewindestutzen weist ein Außengewinde auf, so dass das Zwischenstück den Gewindestutzen übergreift. Das Zwischenstück weist eine für Wasser undurchlässige Sperre auf und stellt so eine Abdeckkappe dar, welche die Öffnung des Gewindestutzens flüssigkeitsdicht abdeckt. An einem ersten, unteren, zur Tellerfläche des Lochtellers weisenden Ende ist das Zwischenstück mit einem Dichtungsring versehen. Der Dichtungsring kann materialeinheitlich von dem Zwischenstück selbst gebildet sein, z. B. in Form einer schmalen Lippe oder einer Rippe, deren Materialquerschnitt bereichsweise gering ist, beispielsweise einer in Form eines dreieckigen Querschnitts der Rippe. Durch Anlage an der zugeordneten Dichtfläche verformt sich die Lippe bzw. das spitze Ende der Rippe, so dass der Dichtungsring dicht an der zugeordneten Dichtfläche anliegt. Der Dichtungsring kann in einer anderen Ausgestaltung zwar auch integraler Bestandteil des Zwischenstücks sein, jedoch aus einem anderen Werkstoff bestehen als das übrige Zwischenstück, nämlich wenn das Zwischenstück aus Kunststoff besteht und der Dichtungsring aus einem anderen, weicheren Kunststoffmaterial besteht, so dass beide Materialien beispielsweise in einem 2K-Spritzgießverfahren verarbeitet werden können.

Alternativ dazu kann an dem Zwischenstück ein separater Dichtungsring montiert werden, der z. B. aus einem Elastomerwerkstoff bestehen kann. Dies ermöglicht erstens eine unkomplizierte Herstellung des Zwischenstücks und zweitens die Verwendung eines preisgünstigen, handelsüblichen Dichtungsrings, z.B. in Form eines O-Rings. Das Zwischenstück kann bereits werkseitig mit dem separaten Dichtungsring bestückt sein, oder die Montage erfolgt im Zuge der Montage der Halterung am Gebäude. Der separate Dichtungsring kann an das erste Ende des Zwischenstücks angeklebt sein oder dort in einer Nut aufgenommen sein.

Je nachdem, wie weit die Dichtungsmanschette in radialer Richtung an den Gewindestutzen des Lochtellers heranreicht, dichtet das Zwischenstück mit seinem Dichtungsring unmittelbar gegen den Lochteller ab, der in diesem Bereich keine Durchgangslöcher in der Tellerfläche aufweist, vorzugsweise jedoch gegen die Dichtungsmanschette. Da das Zwischenstück erstens die erwähnte Sperre und zweitens den Dichtungsring aufweist, ist auch ein als Gewindehülse ausgestalteter, nach oben offener Gewindestutzen des Lochtellers nun wasserdicht abgedichtet. Wasser kann somit nicht zu einer zentralen Verankerungsschraube und zu der Stelle gelangen, wo diese Verankerungsschraube der Gebäudehülle verletzt hat. Die Dichtungsmanschette dichtet zudem die Tellerfläche zur Gebäudehülle sowie zum Gewindestutzen hin ab, so dass auch Verletzungsstellen der Gebäudehülle aufgrund von äußeren Verankerungsschrauben, die sich durch die äußeren Durchgangslöcher der Tellerfläche erstrecken, auf diese Weise abgedichtet und vor dem Eindringen von Wasser geschützt sind.

Auf das obere, zweite Ende des Zwischenstücks wird der Deckel montiert. Das Zwischenstück kann hierzu ein Innen- oder Außengewinde aufweisen, einen Bajonettverschluss oder dergleichen, so dass der Deckel mit dem Zwischenstück in einer zugfesten Art verbunden werden kann, welche die Aufnahme hoher abhebender Kräfte ermöglicht. Der Deckel weist eine Durchgangsöffnung auf und schafft zusammen mit dem Zwischenstück eine Schraubenaufnahme für die Halteschraube, indem deren Schraubenkopf in einem Raum aufgenommen wird, der in axialer Richtung von der wasserdichten Sperre des Zwischenstücks und von dem Deckel begrenzt ist. Das Gewinde der Halteschraube ragt durch die Durchgangsöffnung des Deckels nach oben, wenn sich die die Halteschraube in der Schraubenaufnahme befindet und der Deckel an dem Zwischenstück montiert ist.

Durch die Sperre im Zwischenstück sowie durch den Dichtungsring unten am Zwischenstück ist der nach oben offene Gewindestutzen des Lochtellers vor dem Eintritt von Feuchtigkeit geschützt. Der Deckel dient daher nicht zur Abdichtung des Zwischenstücks nach oben, sondern vielmehr der Aufnahme von abhebenden Kräften, die über die PV-Module und die Unterkonstruktion auf die Halteschraube und damit auf den Deckel einwirken können.

Der Schraubenkopf ist durch eine darauf abgestimmte Formgebung des Zwischenstücks und / oder des Deckels drehfest fixiert. Hierzu weist der als Schraubenaufnahme bezeichnete Raum eine Aufnahme auf, die den Schraubenkopf drehfest fixiert. Wenn beispielsweise eine Maschinenschraube mit hexagonalem Kraftangriff als Halteschraube verwendet wird, kann die Schraubenaufnahme eine entsprechende Mulde aufweisen, in die der Schraubenkopf verdrehsicher eingelegt werden kann, oder sie kann zwei parallele Rippen aufweisen, die dem Schraubenkopf als Verdrehsicherung anliegen. Wenn ein Schraubenkopf verwendet wird, der einen als Innensechskant oder einen mit ähnlicher Geometrie ausgestalteten Kraftangriff aufweist, ist die Aufnahme als Zapfen ausgestaltet, der in diesen Kraftangriff eingreift.

Die Aufnahme für die Halteschraube kann am Deckel angeordnet sein. In einer bevorzugten Ausgestaltung ist die Aufnahme am Zwischenstück angeordnet, nämlich an der wasserdichten Sperre oder oberhalb davon, so dass die Halteschraube zunächst mit ihrem Schraubenkopf in die Aufnahme eingebracht werden kann und mit ihrem Gewinde nach oben ragt, so dass anschließend der Deckel montiert werden kann, ohne dabei gleichzeitig die Halteschraube handhaben zu müssen. Wesentlich ist, dass die Aufnahme keine für Wasser durchlässige Durchbrechung des Zwischenstücks zwischen dessen oberen und dessen unterem Ende schafft, so dass das Zwischenstück als wasserdichte Abdeckkappe den mittleren Hohlraum des Gewindestutzens zuverlässig nach oben hin abdichtet.

Wenn der Deckel durch Verschraubung an dem Zwischenstück gehalten ist, muss der Deckel nicht notwendigerweise fest, also bis zum Anschlag, mit dem Zwischenstück verschraubt sein. Eine lose Verschraubung bewirkt durch die beiden zusammenwirkenden Gewinde die gewünschte Sicherung gegen abhebende Kräfte und ermöglicht gleichzeitig, den Deckel in unterschiedlichen Drehwinkelstellungen am Zwischenstück zu halten. Dies ist beispielsweise dann vorteilhaft, wenn der Deckel in einer bestimmten Ausrichtung zu der PV-Unterkonstruktion stehen muss. Beispielsweise kann der Deckel für ein Anschlusselement der PV-Unterkonstruktion auf seiner Oberseite eine regelrechte Bahn aufweisen, entlang welcher das Anschlusselement verschoben werden kann, um eine Justierung des Anschlusselement in Anpassung an benachbarte Befestigungsstellen der PV-Unterkonstruktion zu ermöglichen.

Gegebenenfalls wird erst jetzt die Dichtungsmanschette gegenüber der Gebäudehülle abgedichtet, um die Montage der Halterung abzuschließen. Das durch die Durchgangsöffnung des Deckels nach oben ragende Gewinde der Halteschraube stellt einen Befestigungspunkt dar, an welchem die Unterkonstruktion der PV-Anlage festgelegt werden kann, wobei je nach Größe der PV-Anlage eine Vielzahl derartiger Befestigungspunkte an dem Gebäude geschaffen werden. An dem Befestigungspunkt können praktisch beliebig ausgestaltete PV-Unterkonstruktionen festgelegt werden. Die Lage der geeigneten Befestigungsstellen wird von der jeweiligen Unterkonstruktion vorgegeben und kann durch Kreuze markiert werden, zum Beispiel durch sich kreuzende, gespannte Schnüre.

Um die Dichtheit der Gebäudehülle besonders zuverlässig zu gewährleisten, kann zusätzlich zu der Halterung eine Dichtungsscheibe verwendet werden, die zwischen der Gebäudehülle und dem Lochteller angeordnet wird. Die Dichtungsscheibe kann erstens mit der Gebäudehülle und / oder dem Lochteller verklebt werden, und sie bietet zweitens bei Verwendung eines entsprechend elastischen Werkstoffs eine zusätzliche Abdichtung dort, sich die Verankerungsschrauben durch die Dichtungsscheibe erstrecken.

In einer Ausgestaltung besteht die Dichtungsscheibe aus einem bituminösen Werkstoff, so dass die Abdichtung gegen die Verankerungsschrauben besonders zuverlässig gegeben ist.

In einer Ausgestaltung ist die Dichtungsscheibe beidseitig selbstklebend ausgestaltet, was deren Handhabung während der Montage erleichtert, weil kein Klebstoff appliziert werden muss. Zudem bietet die beidseitige Verklebung der Dichtungsscheibe einen wasserdichten Anschluss sowohl an die Tellerfläche des Lochtellers als auch an die Gebäudehülle.

Weitere Merkmale, Einzelheiten und Vorteile der Erfindung ergeben sich aus dem Wortlaut der Ansprüche sowie aus der folgenden Beschreibung von Ausführungsbeispielen anhand der rein schematischen Zeichnungen. Es zeigen:
- Fig. 1: eine perspektivische Ansicht auf einen teilweise weggebrochen dargestellten Lochteller,
- Fig. 2: einen Vertikalschnitt durch den Lochteller von Fig. 1,
- Fig. 3: eine perspektivische Ansicht auf eine teilweise weggebrochen dargestellte Dichtungsmanschette,
- Fig. 4: eine perspektivische Ansicht auf ein teilweise weggebrochen dargestelltes Zwischenstück,
- Fig. 5: eine perspektivische Ansicht auf einen Deckel,
- Fig. 6: eine perspektivische Ansicht auf den teilweise weggebrochen dargestellten Deckel von Fig. 5,
- Fig. 7: eine perspektivische Ansicht auf die montierte Baugruppe bestehend aus dem Lochteller, dem Zwischenstück und dem Deckel,
- Fig. 8: eine perspektivische Ansicht auf einen Haken,
- Fig. 9: eine perspektivische Ansicht auf eine Kragenmutter,
- Fig. 10: eine perspektivische Ansicht auf die Baugruppe von Fig. 7 sowie Befestigungselemente und einen Abschnitt einer PV-Unterkonstruktion,
- Fig. 11: eine Ansicht ähnlich Fig. 10, wobei jedoch einige Bauteile teilweise weggebrochen dargestellt sind, und
- Fig. 12: eine Ansicht ähnlich Fig. 11, wobei jedoch zusätzlich eine Dichtungsmanschette und ein Abschnitt einer Dachabdichtungsbahn dargestellt sind.

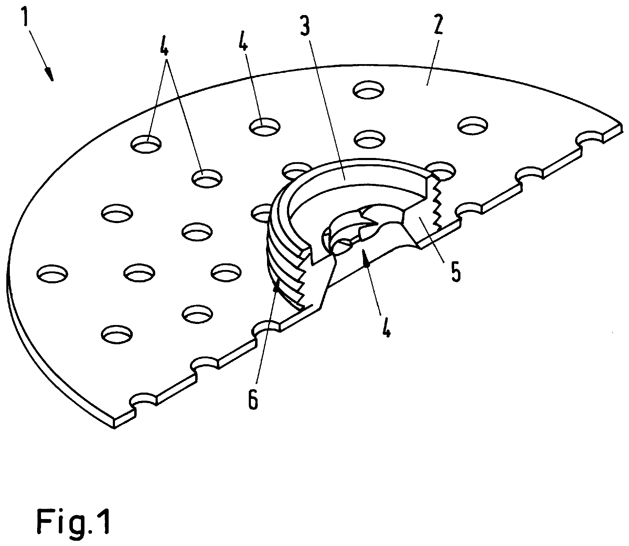

Fig. 1 zeigt perspektivisch einen Teil eines vertikal durchgeschnittenen Lochtellers 1, der im Wesentlichen aus einer Tellerfläche 2 und einem Gewindestutzen 3 gebildet ist. Die Tellerfläche 2 weist eine Vielzahl von so genannten äußeren Durchgangslöchern 4 auf, da diese sich außerhalb des Gewindestutzens 3 befinden. Der Gewindestutzen 3 weist einen Boden 5 auf, nämlich einen Bereich, in welchem die Tellerfläche 2 eine größere Materialstärke aufweist als radial außerhalb von dem Gewindestutzen 3. Der Boden 5 ist mit so genannten zentralen Durchgangslöchern 4 versehen. Weiterhin weist der Gewindestutzen 3 ein Außengewinde 6 auf.

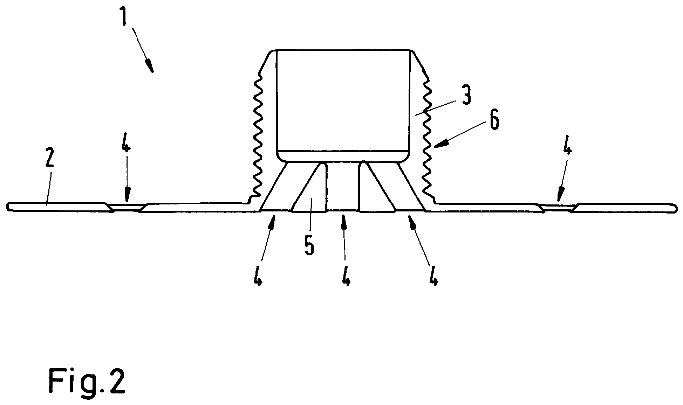

Fig. 2 zeigt einen Vertikalschnitt durch den Lochteller 1, und es sind drei zentrale Durchgangslöcher 4 im Boden 5 des Gewindestutzens 3 erkennbar. Das mittlere davon erstreckt sich in Richtung der Mittelachse des Gewindestutzens 3, während die beiden äußeren der zentralen Durchgangslöcher 4 in einem Winkel von 60°schräg zur Mittelachse verlaufen.

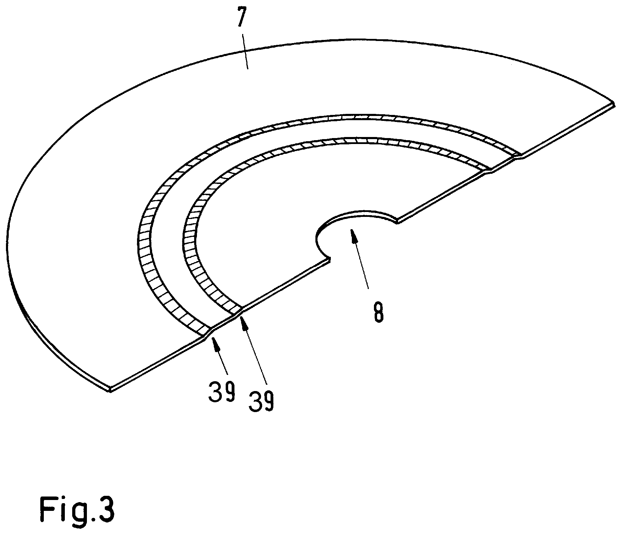

Fig. 3 zeigt perspektivisch einen Teil einer vertikal durchgeschnittenen Dichtungsmanschette 7, die ringförmig um eine mittlere Öffnung 8 verläuft. Die Öffnung 8 ist so bemessen, dass der Gewindestutzen 3 durch die Öffnung 8 gesteckt werden kann, so dass die Dichtungsmanschette 7 von oben auf den Lochteller 1 aufgelegt und der Tellerfläche 2 angelegt werden kann. Die Dichtungsmanschette 7 ist bei dem dargestellten Ausführungsbeispiel als Formteil ausgestaltet und weist zwei ringförmige, konzentrisch um die Öffnung 8 verlaufende Stufen 39 auf, so dass die Öffnung 8 höher liegt als der außen umlaufende Rand der Dichtungsmanschette 7. Abweichend davon kann die Dichtungsmanschette 7 als flacher Materialzuschnitt vorliegen, so dass sich die beiden Stufen 39 erst bei der Montage der Dichtungsmanschette 7 ergeben, wie später noch erläutert wird.

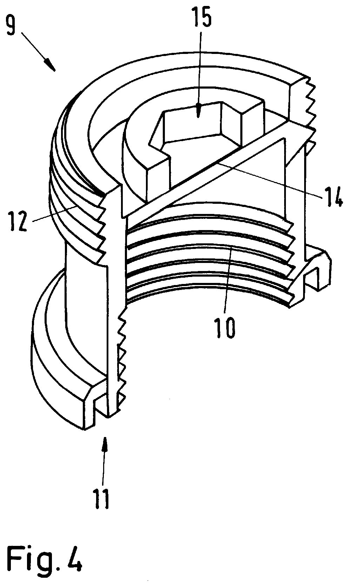

Fig. 4 zeigt perspektivisch einen Teil eines vertikal durchgeschnittenen Zwischenstücks 9. An einem ersten, unteren Ende ist das Zwischenstück 9 mit einem Innengewinde 10 versehen, das mit dem Gewindestutzen 3 des Lochtellers 1 zusammenwirken kann, sowie eine Nut 11, die in axialer Richtung nach unten offen ist und dazu dient, einen Dichtungsring aufzunehmen, der z. B. als O-Ring aus einem Elastomerwerkstoff ausgestaltet sein kann. An einem zweiten, oberen Ende ist das Zwischenstück 9 mit einem Außengewinde 12 versehen, auf das später noch eingegangen wird.

Zwischen dem ersten, unteren Ende und dem zweiten, oberen Ende weist das Zwischenstück 9 eine wasserdichte Sperre 14 auf. Bei dem dargestellten Ausführungsbeispiel ist die Sperre 14 in Art einer Schottwand ausgestaltet, die sich quer durch den Hohlraum des ansonsten rohrförmigen Zwischenstücks 9 erstreckt. Auf der Sperre 14 befindet sich eine Aufnahme 15 in Form einer sechseckigen Mulde, die zur Aufnahme eines Schraubenkopfes einer Halteschraube 29 dient. Die Aufnahme 15 ist mittig auf der Sperre 14 angeordnet, so dass die Mittelachse einer darin aufgenommenen Halteschraube 29 mit der Mittelachse des Zwischenstücks 9 zusammenfällt. Das Zwischenstück 9 ist bei dem dargestellten Ausführungsbeispiel einteilig ausgestaltet und bildet sowohl den rohrförmigen Grundkörper als auch die beiden Innen- und Außengewinde 10 und 12, die Nut 11, die Sperre 14 und die Aufnahme 15 als Bestandteile desselben Bauteils.

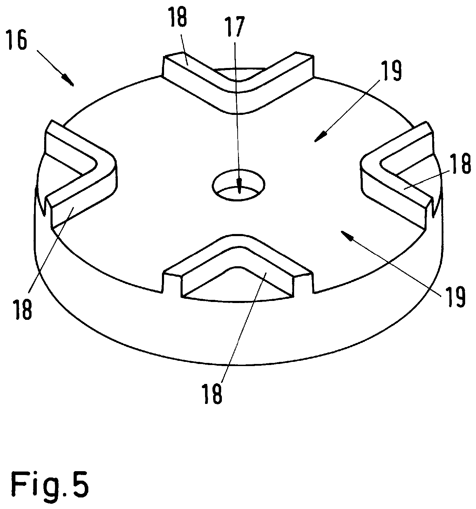

Fig. 5 zeigt perspektivisch einen Deckel 16, der auf das Außengewinde 12 des Zwischenstücks 9 geschraubt werden kann. Der Deckel 16 weist eine mittig angeordnete Durchgangsöffnung 17 auf, durch welche sich der Schaft der oben erwähnten Halteschraube 29 erstrecken kann. Oben auf dem Deckel 16 sind vier Führungswinkel 18 in der Art angeordnet, dass sich zwischen den Führungswinkeln 18 zwei sich kreuzende Bahnen 19 ergeben, auf die später noch eingegangen wird.

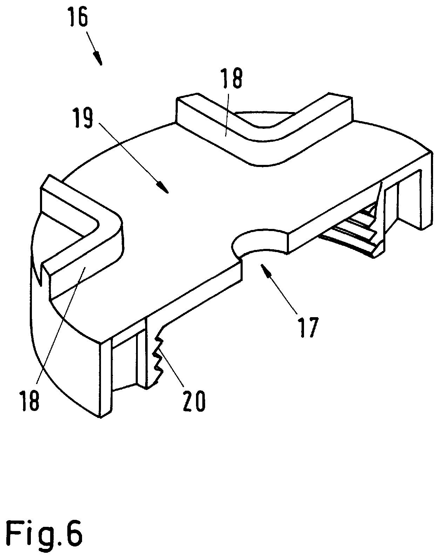

Fig. 6 zeigt perspektivisch einen Teil des vertikal durchgeschnittenen Deckels 16, so dass ein Deckelgewinde 20 erkennbar ist, welches mit dem Außengewinde 12 des Zwischenstücks 9 zusammenwirkt.

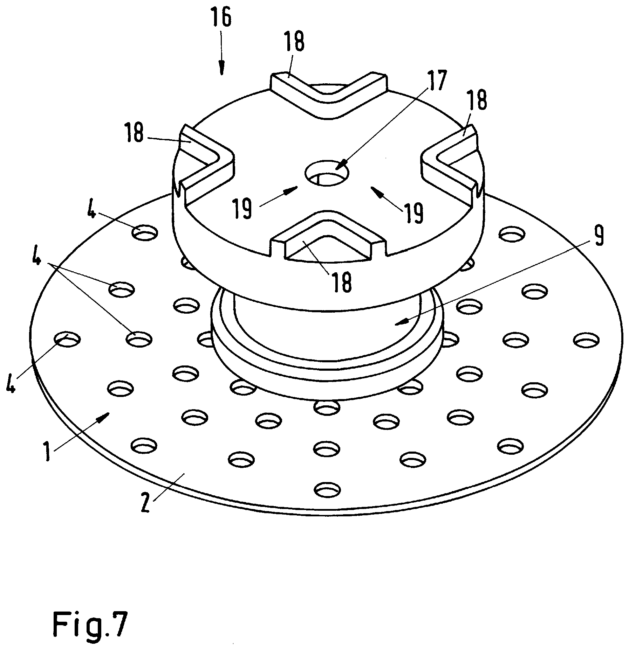

Fig. 7 zeigt perspektivisch die zusammengebaute Baugruppe, bestehend aus dem Lochteller 1, dem Zwischenstück 9 und dem Deckel 16.

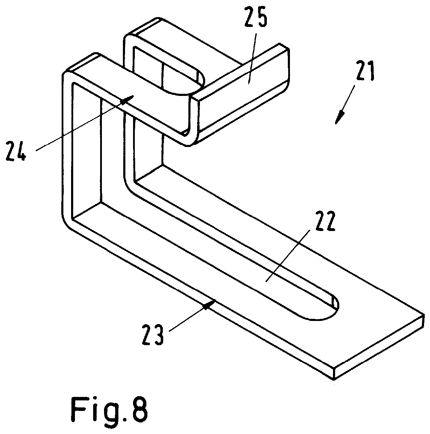

Fig. 8 zeigt perspektivisch einen Haken 21, der als Kantteil aus Blech hergestellt ist, eine Mittelnut 22 aufweist und im Wesentlichen U-förmig verläuft, mit einem langen unteren Auflageschenkel 23 sowie einem kleineren oberen Tragschenkel 24, der mit einer nach oben gekanteten Anlagekante 25 endet.

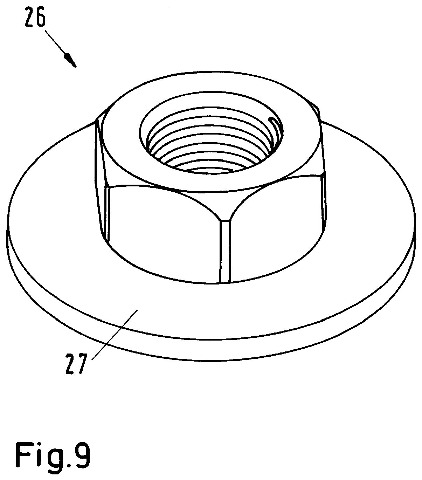

Fig. 9 zeigt perspektivisch eine Kragenmutter 26, die aus einer Sechskant-Mutter sowie einem umlaufenden, nach außen ragenden Kragen 27 am unteren Ende der Sechskant-Mutter besteht.

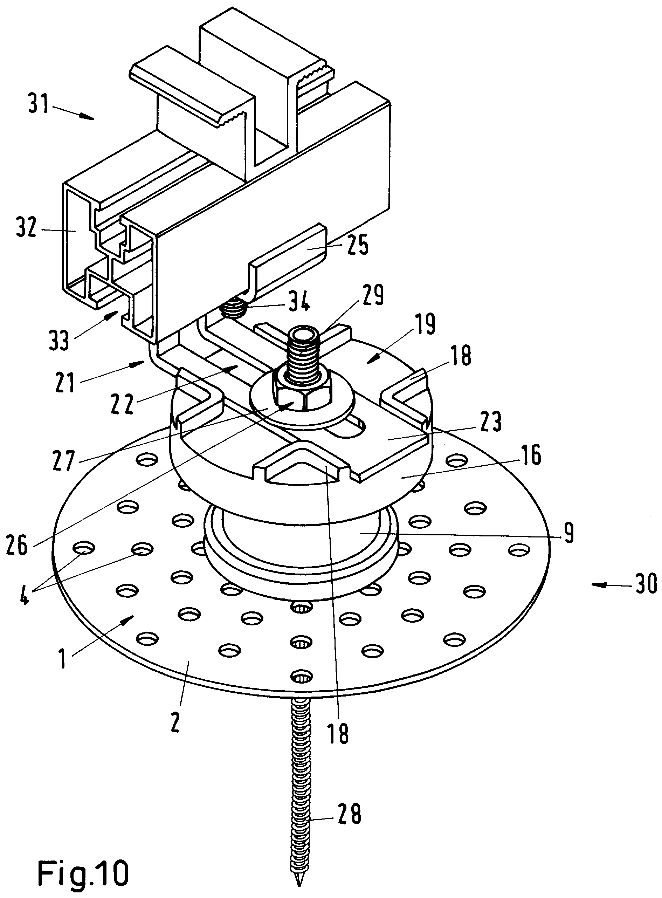

Fig. 10 zeigt perspektivisch die Elemente der in Fig. 7 dargestellten Baugruppe, wobei in den Lochteller 1 eine Verankerungsschraube 28 in das mittlere der drei zentralen Durchgangslöcher 4 eingesetzt worden ist, bevor das Zwischenstück 9 auf den Gewindestutzen 3 des Lochtellers 1 geschraubt worden ist. Weiterhin ist eine Halteschraube 29 dargestellt, die in den als Schraubenaufnahme 35 bezeichneten Raum eingesetzt ist, der sich zwischen der Sperre 14 des Zwischenstücks 9 und dem Deckel 16 ergibt. Der Schraubenkopf der Halteschraube 29 ist dabei in die Aufnahme 15 eingesetzt, so dass der Schaft der Halteschraube 29 nach oben ragt und sich durch die Durchgangsöffnung 17 des Deckels 16 nach oben erstreckt.

Zusammen mit den beiden Verankerungs- und Halteschrauben 28 und 29 bildet die in Fig. 7 dargestellte Baugruppe eine Halterung 30, die einen Befestigungspunkt für eine Unterkonstruktion einer PV-Anlage schafft, wobei in Fig. 10 die Halterung 30 mechanisch funktionsfähig ist, um die Unterkonstruktion an einem Gebäude zu befestigen, jedoch aus Übersichtlichkeitsgründen ohne die Dichtungsmanschette dargestellt ist. Weitere, in Fig. 10 nicht dargestellte Verankerungsschrauben 28 können sich durch die äußeren Durchgangslöcher 4 der Tellerfläche 2 erstrecken, wenn dies zur sicheren Festlegung der Halterung 30 an dem Gebäude vorteilhaft ist. Auch kann abweichend von dem dargestellten Ausführungsbeispiel die Anordnung von zwei zentralen Verankerungsschrauben 28 vorgesehen sein, die sich durch die beiden äußeren, schräg verlaufenden zentralen Durchgangslöcher 4 des Lochtellers 1 erstrecken.

Weiterhin zeigt Fig. 10 ausschnittsweise Elemente einer Unterkonstruktion 31, die dazu dient, PV-Module aufzunehmen. Der Haken 21 ist mit seinem unteren, langen Auflageschenkel 23 auf eine Bahn 19 des Deckels 16 aufgelegt worden. Die Mittelnut 22 nimmt dabei den Schaft der Halteschraube 29 auf und ermöglicht in Art eines Langlochs, den Haken 21 auf dem Deckel 16 zu verschieben und somit seine Lage zu justieren. Mittels der Kragenmutter 26 ist der Haken 21 an der Halteschraube 29 und auf dem Deckel 16 in der gewünschten Stellung fixiert. Der Kragen 27 sichert dabei eine großflächige Übertragung der Anpresskräfte von der Kragenmutter 26 auf den Auflageschenkel 23.

Ein Profilelement 32 der Unterkonstruktion 31 liegt auf dem Tragschenkel 24 des Hakens 21 und ist durch die Anlage an der Anlagekante 25 geführt. Das Profilelement 32 weist an einer Unterseite eine C-förmige Schraubennut 33 auf, in der ein Schraubenkopf einer Schraube 34 verdrehsicher, aber längsverschiebbar aufgenommen ist. Die Schraube 34 erstreckt sich durch den Abschnitt der Mittelnut 22, der in dem Tragschenkel 24 des Hakens 21 verläuft, so dass das Profilelement 32 mittels der Schraube 34 und einer entsprechenden Mutter an dem Haken 21 festgelegt ist.

Durch die Sperre 14 im Zwischenstück 9 sowie durch den Dichtring in der unteren Nut 11 des Zwischenstücks 9 ist der nach oben offene Gewindestutzen 3 vor dem Eintritt von Feuchtigkeit geschützt, die somit auch nicht zur Verankerungsschraube 28 gelangen kann. Der Deckel 16 dient daher nicht zur Abdichtung des Zwischenstücks 9 nach oben, sondern vielmehr dient die Verschraubung, mittels welcher der Deckel 16 an dem Zwischenstück 9 gehalten ist, der Aufnahme von abhebenden Kräften, die über die PV-Module und die Unterkonstruktion 31 sowie den Haken 21 auf die Halteschraube 29 und damit auf den Deckel 16 einwirken können. Da es somit ausreichend ist, den Deckel 16 nicht fest, sondern lose mit dem Zwischenstück 9 zu verschrauben, kann die Drehwinkelstellung, in welcher sich die beiden Bahnen 19 in Bezug auf die Mittelachse der Halterung 30 befinden, problemlos geändert und in Anpassung an die jeweiligen Erfordernisse ausgerichtet werden. Zusammen mit der Längsverschiebbarkeit des Hakens 21 auf dem Deckel 16 ermöglicht dies eine Feinjustage der Halterung 30 in Anpassung an den Verlauf des Profilelements 32.

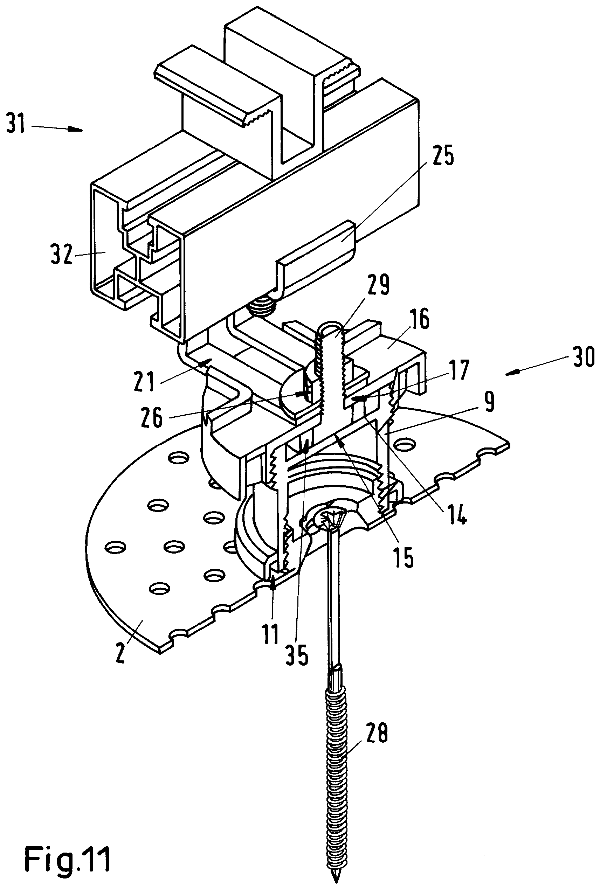

Fig. 11 zeigt die Anordnung von Fig. 10 aus derselben Blickrichtung, wobei jedoch die Halterung 30 - wiederum ohne Dichtungsmanschette dargestellt - entlang ihrer Mittelachse geschnitten ist, so dass das Zusammenwirken der einzelnen Bauteile deutlich wird. Aus Übersichtlichkeitsgründen ist erstens ein Dichtungsring, der in die Nut 11 des Zwischenstücks 9 eingelegt ist, nicht dargestellt, und zweitens sind auch nicht sämtliche der in der Beschreibung verwendeten Bezugszeichen dargestellt. Fig. 11 zeigt, dass durch den Deckel 16 oberhalb der Sperre 14 innerhalb des Zwischenstücks 9 ein Raum geschaffen wird, der bis auf die Durchgangsöffnung 17 im Deckel 16 geschlossen ist und als Schraubenaufnahme 35 bezeichnet ist. Innerhalb dieses Raums befindet sich die Aufnahme 15, welche die Halteschraube 29 verdrehsicher hält. Abweichend von dem dargestellten Ausführungsbeispiel und unabhängig von der Ausgestaltung der weiteren Merkmale des Ausführungsbeispiels könnte eine Aufnahme 15 auch an der Unterseite des Deckels 16 verwirklicht sein, beispielsweise durch zwei parallele Rippen, die zwei gegenüberliegenden Flanken des Kopfes der Halteschraube 29 anliegen. Dadurch, dass der Durchmesser der Durchgangsöffnung 17 lediglich geringfügig größer ist als der Durchmesser des Schaftes der Halteschraube 29, liegt der Kopf der Halteschraube 29 von unten dem Deckel 16 an, so dass die Halteschraube 29 gegen abhebende Kräfte gesichert in der Schraubenaufnahme 35 gehalten ist.

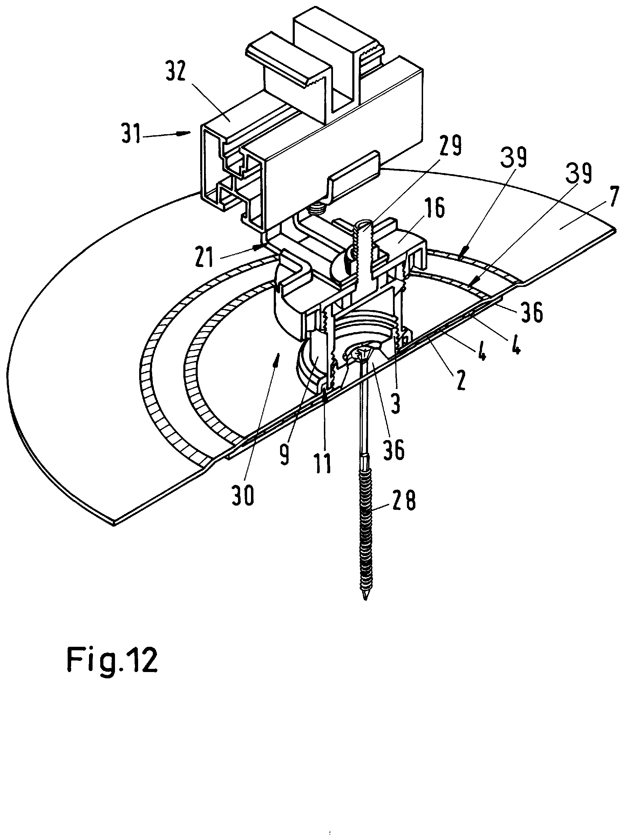

Fig. 12 zeigt die Anordnung von Fig. 11 aus derselben Blickrichtung, wobei jedoch die gesamte Halterung 30 einschließlich der Dichtungsmanschette 7 dargestellt ist. Bei dem dargestellten Ausführungsbeispiel weist die Öffnung 8 der Dichtungsmanschette 7 einen so geringen Durchmesser auf, dass die Dichtungsmanschette 7 sich bis an den Gewindestutzen 3 erstreckt. Die Nut 11 des Zwischenstücks 9 verläuft daher über der Dichtungsmanschette 7, so dass das Zwischenstück 9 mittels des nicht dargestellten Dichtungsrings gegen die Dichtungsmanschette 7 abdichtet.

Unterhalb der Tellerfläche 2 des Lochtellers 1 ist eine Dichtungsscheibe 36 dargestellt, die bei dem dargestellten Ausführungsbeispiel aus einem kreisrunden Abschnitt einer beidseitig selbstklebende ausgestatteten Bitumenbahnen besteht. Die Dichtungsscheibe 36 deckt den Lochteller 1 nach unten hin ab und erstreckt sich radial noch weiter über die Tellerfläche 2 hinaus. Verankerungsschrauben 28, die als zentrale oder als äußere Verankerungsschrauben 28 gesetzt werden, durchdringen beim Einschrauben in eine Tragstruktur des Gebäudes die Dichtungsscheibe 36, wobei der bituminöse Werkstoff der Dichtungsscheibe 36 als zusätzliche Abdichtungsmaßnahme sich eng an die Verankerungsschrauben 28 anlegt.

Durch die unterschiedlichen Durchmesser der Dichtungsscheibe 36 und der Tellerfläche 2 ergeben sich die beiden Stufen 39 in der Dichtungsmanschette 7 auch dann, wenn die Dichtungsmanschette 7 nicht als Formteil hergestellt ist und bereits werksseitig die beiden Stufen 39 aufweist, sondern wenn die Dichtungsmanschette 7 als plane Scheibe aus einem entsprechend verformbaren Material besteht. Beispielsweise kann die Dichtungsmanschette 7 eine Scheibe aus einem Vliesstoff aufweisen, die mit einem flüssigen Abdichtungsmaterial getränkt wird, nachdem sie auf den Lochteller 1 aufgelegt worden ist.

Die Erfindung ist nicht auf eine der vorbeschriebenen Ausführungsformen beschränkt, sondern in vielfältiger Weise abwandelbar.

Die Erfindung wird durch die nachfolgenden Ansprüche definiert.

### Bezugszeichenliste

- 1: Lochteller
- 2: Tellerfläche
- 3: Gewindestutzen
- 4: Durchgangslöcher
- 5: Boden
- 6: Außengewinde
- 7: Dichtungsmanschette
- 8: Öffnung
- 9: Zwischenstück
- 10: Innengewinde
- 11: Nut
- 12: Außengewinde
- 14: Sperre
- 15: Aufnahme
- 16: Deckel
- 17: Durchgangsöffnung
- 18: Führungswinkel
- 19: Bahn
- 20: Deckelgewinde
- 21: Haken
- 22: Mittelnut
- 23: Auflageschenkel
- 24: Tragschenkel
- 25: Anlagekante
- 26: Kragenmutter
- 27: Kragen
- 28: Verankerungsschraube
- 29: Halteschraube
- 30: Halterung
- 31: Unterkonstruktion
- 32: Profilelement
- 33: Schraubennut
- 34: Schraube
- 35: Schraubenaufnahme
- 36: Dichtungsscheibe
- 39: Stufe

## Patentansprüche

1. Halterung (30), die dazu eingerichtet ist, eine Photovoltaik-Unterkonstruktion (31) an einem Gebäude zu befestigen,
wobei die Halterung (30) folgende Elemente aufweist:
• einen Lochteller (1) samt Gewindestutzen (3),
wobei der Lochteller (1) eine Tellerfläche (2) bildet, die wenigstens ein Durchgangsloch (4) aufweist,
und wobei sich der Gewindestutzen (3) von der Ebene der Tellerfläche (2) weg erstreckt,
• eine ringförmige Dichtungsmanschette (7),
die im Gebrauch um den Gewindestutzen (3) des Lochtellers (1) verläuft, und die sich radial über die Tellerfläche (2) hinaus erstreckt,
• ein Zwischenstück (9),
das zwei Enden aufweist,
im Gebrauch auf den Gewindestutzen (3) geschraubt ist,
und das zwischen seinen beiden Enden eine für Wasser undurchlässige Sperre (14) aufweist,
• einen Dichtungsring,
der an einem ersten Ende des Zwischenstücks (9) so angeordnet ist, dass er an der Dichtungsmanschette (7) oder an der Tellerfläche (2) dicht anliegt,
• einen Deckel (16),
der im Gebrauch zugfest an das zweite Ende des Zwischenstücks (9) anschließt, und der eine Durchgangsöffnung (17) in der Art aufweist, dass eine Halteschraube (29) sich aus in einer vom Lochteller (1) weg weisenden Richtung durch die Durchgangsöffnung (17) erstrecken kann und gegen abhebende Kräfte gesichert ist,
• die erwähnte Halteschraube (29),
deren Schraubenkopf in einem als Schraubenaufnahme (35) bezeichneten Raum zwischen der Sperre (14) und dem Deckel (16) aufgenommen ist,
• und wenigstens eine Verankerungsschraube (28), die sich durch das Durchgangsloch (4) des Lochtellers (1) erstreckt und mittels welcher die Halterung (30) im Gebrauch am Gebäude festgelegt ist.

2. Halterung nach Anspruch 1,
**dadurch gekennzeichnet,**
**dass** die Tellerfläche (2) des Lochtellers (1) innerhalb des Gewindestutzens (3) eine größere Materialstärke aufweist als außerhalb des Gewindestutzens (3),
und **dass** wenigstens ein Durchgangsloch (4) innerhalb des Gewindestutzens (3) in der Tellerfläche (2) angeordnet ist.

3. Halterung nach Anspruch 1 oder 2,
**dadurch gekennzeichnet,**
**dass** wenigstens ein Durchgangsloch (4) außerhalb des Gewindestutzens (3) in der Tellerfläche (2) angeordnet ist.

4. Halterung nach einem der vorhergehenden Ansprüche,
**dadurch gekennzeichnet,**
**dass** die Dichtungsmanschette (7) als Formteil ausgestaltet ist und wenigstens eine ringförmig verlaufende Stufe (39) in der Art aufweist, dass ein mittlerer Bereich und eine darin befindliche, den Gewindestutzen (3) aufnehmende Öffnung (8) höher als der außen umlaufende Rand der Dichtungsmanschette (7) angeordnet sind.

5. Halterung nach einem der vorhergehenden Ansprüche,
**dadurch gekennzeichnet,**
**dass** sich die Dichtungsmanschette (7) so weit bis an den Gewindestutzen (3) heran erstreckt, dass der am Zwischenstück befindliche Dichtungsring an der Dichtungsmanschette (7) anliegt.

6. Halterung nach Anspruch 5,
**dadurch gekennzeichnet,**
**dass** die Dichtungsmanschette (7) in einem radial inneren Bereich an der Tellerfläche (2) befestigt ist,
und in einem radial äußeren Bereich der Tellerfläche (2) lose anliegt,
und **dass** in diesem radial äußeren Bereich Durchgangslöcher (4) in der Tellerfläche (2) angeordnet sind.

7. Halterung nach einem der vorhergehenden Ansprüche,
**dadurch gekennzeichnet,**
**dass** der Dichtungsring als separates Bauteil ausgestaltet ist.

8. Halterung nach Anspruch 7,
**dadurch gekennzeichnet,**
**dass** das Zwischenstück (9) an seinem ersten Ende eine Nut (11) aufweist, die dazu eingerichtet ist, den Dichtungsring aufzunehmen.

9. Halterung nach einem der vorhergehenden Ansprüche,
**dadurch gekennzeichnet,**
**dass** das Zwischenstück (9) im Wesentlichen rohrförmig ausgestaltet ist und die Sperre (14) in Form einer Trennwand ausgestaltet ist, die sich quer durch das Innere des Zwischenstücks (9) erstreckt.

10. Halterung nach einem der vorhergehenden Ansprüche,
**dadurch gekennzeichnet,**
**dass** das Zwischenstück (9) und der Deckel (16) miteinander verschraubbar sind.

11. Halterung nach einem der vorhergehenden Ansprüche,
**dadurch gekennzeichnet,**
**dass** der Deckel (16) auf seiner Oberseite seitliche Anschläge aufweist, welche eine Bahn (19) begrenzen, entlang welcher ein Anschlusselement der Unterkonstruktion (31) verschiebbar ist.

12. Halterung nach Anspruch 11,
**dadurch gekennzeichnet,**
**dass** sich die Durchgangsöffnung des Deckels (16) in der Bahn (19) befindet.

13. Anordnung, die dazu eingerichtet ist, eine Photovoltaik-Unterkonstruktion (31) an einem Gebäude zu befestigen, mit einer Halterung (30) nach einem der vorhergehenden Ansprüche,
und mit einer Dichtungsscheibe (36), die unterhalb des Lochtellers (1) angeordnet ist.

14. Anordnung nach Anspruch 13,
**dadurch gekennzeichnet,**
**dass** die Dichtungsscheibe (36) aus einem bituminösen Werkstoff besteht.

15. Anordnung nach Anspruch 13 oder 14,
**dadurch gekennzeichnet,**
**dass** die Dichtungsscheibe (36) beidseitig selbstklebend ausgestaltet ist.

## Claims

1. Bracket (30) which is configured for fastening a photovoltaic sub-construction (31) to a building, wherein the bracket (30) has the following elements:
• a perforated plate (1) and threaded connector (3),
wherein the perforated plate (1) forms a plate surface (2) which has at least one passage hole (4),
and wherein the threaded connector (3) extends away from the plane of the plate surface (2),
• an annular sealing sleeve (7),
which runs around the threaded connector (3) of the perforated plate (1) during use,
and which extends radially beyond the plate surface (2),
• an intermediate piece (9),
which has two ends,
is screwed onto the threaded connector (3) during use,
and which has a water-impermeable barrier (14) between its two ends,
• a sealing ring,
which is arranged at a first end of the intermediate piece (9) such that it lies tightly against the sealing sleeve (7) or the plate surface (2),
• a cover (16),
which adjoins the second end of the intermediate piece (9) in tension-resistant fashion during use,
and which has a through-opening (17) such that a holding screw (29) can extend through the through-opening (17) in a direction facing away from the perforated plate (1) and is secured against lifting forces,
• the aforementioned holding screw (29),
the screw head of which is received in a space called a screw receiver (35) between the barrier (14) and the cover (16),
• and at least one anchoring screw (28) which extends through the passage hole (4) of the perforated plate (1) and by means of which the bracket (30) is fixed to the building during use.

2. Bracket according to Claim 1,
**characterized in that**
the plate surface (2) of the perforated plate (1) has a greater material thickness inside the threaded connector (3) than outside the threaded connector (3),
and **in that** at least one passage hole (4) is arranged in the plate surface (2) inside the threaded connector (3).

3. Bracket according to Claim 1 or 2,
**characterized in that**
at least one passage hole (4) is arranged in the plate surface (2) outside the threaded connector (3).

4. Bracket according to one of the preceding claims, **characterized in that**
the sealing sleeve (7) is designed as a moulded part and has at least one annular step (39) such that a central region and an opening (8), which is located therein and receives the threaded connector (3), are arranged higher than the outer peripheral edge of the sealing sleeve (7).

5. Bracket according to one of the preceding claims, **characterized in that**
the sealing sleeve (7) extends up to the threaded connector (3) so far that the sealing ring located on the intermediate piece lies against the sealing sleeve (7).

6. Bracket according to Claim 5,
**characterized in that**
the sealing sleeve (7) is fastened to the plate surface (2) in a radially inner region,
and rests loosely in a radially outer region of the plate surface (2),
and **in that** in this radially outer region, passage holes (4) are arranged in the plate surface (2).

7. Bracket according to one of the preceding claims, **characterized in that**
the sealing ring is designed as a separate component.

8. Bracket according to Claim 7,
**characterized in that**
the intermediate piece (9) has at its first end a groove (11) which is configured to receive the sealing ring.

9. Bracket according to one of the preceding claims, **characterized in that**
the intermediate piece (9) is substantially tubular and the barrier (14) is designed in the form of a partition wall which extends transversely through the interior of the intermediate piece (9).

10. Bracket according to one of the preceding claims, **characterized in that**
the intermediate piece (9) and the cover (16) can be screwed together.

11. Bracket according to one of the preceding claims, **characterized in that**
the cover (16) has on its top side lateral stops delimiting a track (19), along which a connecting element of the sub-construction (31) can be displaced.

12. Bracket according to Claim 11,
**characterized in that**
the through-opening of the cover (16) is located in the track (19).

13. Assembly which is configured for fastening a photovoltaic sub-construction (31) to a building, with a bracket (30) according to one of the preceding claims, and with a sealing washer (36) arranged below the perforated plate (1).

14. Assembly according to Claim 13,
**characterized in that**
the sealing washer (36) consists of a bituminous material.

15. Assembly according to Claim 13 or 14,
**characterized in that**
the sealing washer (36) is designed self-adhesive on both sides.

## Revendications

1. Support (30), conçu pour fixer une sous-structure photovoltaïque (31) à un bâtiment,
le support (30) présentant les éléments suivants :
• une plaque perforée (1) avec raccord fileté (3), la plaque perforé (1) formant une surface de plaque (2) qui présente au moins un trou traversant (4), et le raccord fileté (3) s'étendant à partir du plan de la surface de plaque (2),
• une manchette d'étanchéité annulaire (7), qui, lors de l'utilisation, s'étend autour du raccord fileté (3) de la plaque perforée (1),
et qui s'étend radialement au-delà de la surface de plaque (2),
• une pièce intermédiaire (9),
qui présente deux extrémités,
est vissée sur le raccord fileté (3) pendant l'utilisation,
et qui présente entre ses deux extrémités une barrière (14) imperméable à l'eau,
• une bague d'étanchéité,
qui est agencée à une première extrémité de la pièce intermédiaire (9) de manière à reposer de manière étanche contre la manchette d'étanchéité (7) ou contre la surface de plaque (2),
• un couvercle (16),
qui, lors de l'utilisation, se raccorde de manière résistante à la traction à la deuxième extrémité de la pièce intermédiaire (9) et qui présente une ouverture de passage (17) de telle sorte qu'une vis de support (29) peut s'étendre à travers l'ouverture de passage (17) dans une direction s'éloignant de la plaque perforée (1) et est protégée contre les forces de soulèvement,
• la vis de support mentionnée (29),
dont la tête de vis est logée dans un espace appelé logement de vis (35) entre la barrière (14) et le couvercle (16),
• et au moins une vis d'ancrage (28) qui s'étend à travers le trou traversant (4) de la plaque perforée (1) et au moyen de laquelle le support (30) est fixé au bâtiment lors de l'utilisation.

2. Support selon la revendication 1,
**caractérisé**
**en ce que** la surface de plaque (2) de la plaque perforée (1) présente une épaisseur de matériau plus importante à l'intérieur du raccord fileté (3) qu'à l'extérieur du raccord fileté (3),
et **en ce qu'**au moins un trou traversant (4) est agencé à l'intérieur du raccord fileté (3) dans la surface de plaque (2).

3. Support selon la revendication 1 ou 2,
caractérisé
et en ce qu'au moins un trou traversant (4) est agencé à l'intérieur du raccord fileté (3) dans la surface de plaque (2).

4. Support selon l'une quelconque des revendications précédentes,
**caractérisé**
**en ce que** la manchette d'étanchéité (7) est conçue sous forme de pièce moulée et présente au moins un gradin annulaire (39) de telle sorte qu'une zone centrale et une ouverture (8) se trouvant dans celle-ci, recevant le raccord fileté (3), sont agencées plus haut que le bord extérieur périphérique de la manchette d'étanchéité (7).

5. Support selon l'une quelconque des revendications précédentes,
**caractérisé**
**en ce que** la manchette d'étanchéité (7) s'étende jusqu'au raccord fileté (3) de manière à ce que la bague d'étanchéité se trouvant sur la pièce intermédiaire repose contre la manchette d'étanchéité (7).

6. Support selon la revendication 5,
**caractérisé**
**en ce que** la manchette d'étanchéité (7) est fixée dans une zone radialement intérieure à la surface de plaque (2),
et repose de manière lâche dans une zone radialement extérieure de la surface de plaque (2),
et **en ce que**, dans cette zone radiale extérieure, des trous traversants (4) sont agencés dans la surface de plaque (2).

7. Support selon l'une quelconque des revendications précédentes,
**caractérisé**
**en ce que** la bague d'étanchéité est conçue sous forme de composant séparé.

8. Support selon la revendication 7,
**caractérisé**
**en ce que** la pièce intermédiaire (9) présente, à sa première extrémité, une rainure (11) qui est adaptée pour recevoir la bague d'étanchéité.

9. Support selon l'une quelconque des revendications précédentes,
**caractérisé**
**en ce que** la pièce intermédiaire (9) est essentiellement de forme tubulaire et la barrière (14) est conçue sous la forme d'une cloison qui s'étend transversalement à l'intérieur de la pièce intermédiaire (9).

10. Support selon l'une quelconque des revendications précédentes,
**caractérisé**
**en ce que** la pièce intermédiaire (9) et le couvercle (16) peuvent être vissés l'un à l'autre.

11. Support selon l'une quelconque des revendications précédentes,
**caractérisé**
**en ce que** le couvercle (16) présente sur son côté supérieur des butées latérales qui délimitent une trajectoire (19) le long de laquelle un élément de raccordement de la sous-structure (31) peut coulisser.

12. Support selon la revendication 11,
**caractérisé**
**en ce que** l'ouverture de passage du couvercle (16) se trouve dans la trajectoire (19).

13. Agencement, adapté pour fixer une sous-structure photovoltaïque (31) à un bâtiment, comprenant un support (30) selon l'une quelconque des revendications précédentes,
et comprenant une rondelle d'étanchéité (36) agencée sous la plaque perforée (1).

14. Agencement selon la revendication 13,
**caractérisé**
**en ce que** la rondelle d'étanchéité (36) est constituée d'un matériau bitumineux.

15. Agencement selon la revendication 13 ou 14, **caractérisé**
**en ce que** la rondelle d'étanchéité (36) est conçue sous forme autocollante des deux côtés.
